# EUROPEAN PATENT APPLICATION

(11) **EP 4 075 190 A1**
(43) Date of publication of application: **19.10.2022**
(21) Application number: 20864334.6
(22) Date of filing: 08.12.2020
(51) Int. Cl.: G02F 1/1335

(54) **DIMMING GLASS AND GLASS MODULE**

(30) Priority: 12.12.2019 CN 201911275372
(71) Applicant: BOE Technology Group Co., Ltd., Beijing 100015 (CN); Beijing BOE Optoelectronics Technology Co., Ltd., Beijing 100176 (CN)
(72) Inventor: WU, Xiaojuan, Beijing 100176 (CN); ZHAO, Zhiqiang, Beijing 100176 (CN); WANG, Jiaxing, Beijing 100176 (CN); YUAN, Hongliang, Beijing 100176 (CN); WANG, Jian, Beijing 100176 (CN)
(74) Representative: Cohausz & Florack
(86) International application number: PCT/CN2020/134453
(87) International publication number: WO 2021/115246

(57) **Abstract**

The present disclosure provides a light-adjusting glass and a glass module, which belongs to the field of display glass technology. The light-adjusting glass of the present disclosure includes a basic light-adjusting structure and a reflective polarizer; and the basic light-adjusting structure includes a first substrate, a second substrate and a first liquid crystal layer, wherein the first substrate and the second substrate are opposite to each other, and the first liquid crystal layer is between the first substrate and the second substrate; the first liquid crystal layer is configured to rotate under an electric field between the first substrate and the second substrate so as to control transmittance of light; the reflective polarizer is on a side of the first substrate distal to the first liquid crystal layer.

## Description

### CROSS REFERENCE TO RELATED APPLICATIONS

The present application claims the priority of the Chinese Patent Application with the Application No. 201911275372.4 filed December 12, 2019, the content of which is incorporated herein by reference in its entirety.

### TECHNICAL FIELD

The present disclosure relates to the field of display glass technology, and in particular to a light-adjusting glass and a glass module.

### BACKGROUND

At present, the light-adjusting glass is used more and more extensively in the fields of building and traffic, and existing customers of automobiles, high-speed rails, passenger planes and the like are interested in a dye liquid crystal light-adjusting glass. Products such as PDLC smart glass, electrochromic smart glass and the like exist in an existing smart glass market. The PDLC smart glass may only realize a switching between transparency and haze, and does not shade light or insulate heat; the electrochromic smart glass has the problems of a complex film forming process, a long response time (8 to 20s), bluish light in a dark state and the like. The dye liquid crystal light-adjusting glass realizes a switching between a bright state and a dark state by utilizing a selective absorption of dichroic dye molecules in liquid crystals to light, and greatly improves optical properties such as black state purity, response time and the like compared with the existing PDLC smart glass and the electrochromic smart glass. However, the existing dye liquid crystal light-adjusting glass may only realize an adjustment of a black state, a bright state and a gray scale state, that is, can only adjust the transmittance of the glass to visible light. When the light-adjusting glass is used for vehicle windows, meeting room partitions and building glass, the light-adjusting glass has a requirement of privacy protection while transmitting light; in the fields of vehicle windows, art design and the like, the whole-surface color light-adjusting glass has a great application prospect. Current light-adjusting glass does not meet requirements of these applications.

### SUMMARY

The present disclosure provides a light-adjusting glass and a glass module.

In a first aspect, an embodiment of the present disclosure provides a light-adjusting glass, including a basic light-adjusting structure and a reflective polarizer; wherein the basic light-adjusting structure includes a first substrate, a second substrate and a first liquid crystal layer, wherein the first substrate and the second substrate are opposite to each other, and the first liquid crystal layer is between the first substrate and the second substrate; the first liquid crystal layer is configured to rotate under an electric field between the first substrate and the second substrate so as to control the transmittance of light;
the reflective polarizer is on a side of the first substrate distal to the first liquid crystal layer.

Optionally, the first liquid crystal layer includes: base liquid crystal molecules and dichroic dye molecules.

Optionally, the first substrate includes a first base, a first electrode on a side of the first base proximal to the first liquid crystal layer; the second substrate includes a second base and a second electrode on a side of the second base proximal to the first liquid crystal layer; wherein
the first electrode and the second electrode are both plate-shaped electrodes.

Optionally, the first substrate includes a first base, a first electrode on a side of the first base proximal to the first liquid crystal layer; the second substrate includes a second base and a second electrode on a side of the second base proximal to the first liquid crystal layer; wherein
one of the first electrode and the second electrode is a plate-shaped electrode, and the other is a strip-shaped electrode.

Optionally, the first base is adhered to the reflective polarizer by a reflective adhesive layer.

Optionally, the reflective polarizer includes any one of APF, DBEF, DLRP.

Optionally, the reflective polarizer has a thickness of 150 µm or less.

Optionally, a first protective glass is on a side of the reflective polarizer distal to the first substrate; the first protective glass is adhered to the reflective polarizer through a first adhesive layer.

Optionally, a first protective glass is on a side of the reflective polarizer distal to the first substrate; the first protective glass is adhered to the reflective polarizer through a first adhesive layer;
a second protective glass is on a first side of the second substrate distal to the first liquid crystal layer; the second protective glass is adhered to the reflective polarizer through a second adhesive layer.

Optionally, a first protective glass is on a side of the reflective polarizer distal to the first substrate; the first protective glass is adhered to the reflective polarizer through a first adhesive layer;
a second protective glass is on a first side of the second substrate distal to the first liquid crystal layer; a certain distance exists between the second substrate and the second protective glass, and the second protective glass is sealed with the basic light-adjusting structure by a frame sealant.

Optionally, a functional light-adjusting structure is on a layer of the second substrate distal to the liquid crystal layer; wherein the functional light-adjusting structure includes a third substrate, a fourth substrate and a second liquid crystal layer, wherein the third substrate and the fourth substrate are opposite to each other, and the second liquid crystal layer is between the third substrate and the fourth substrate; the second liquid crystal layer is configured to rotate under an electric field between the third substrate and the fourth substrate, so that the functional light-adjusting structure is in a foggy state.

Optionally, the second liquid crystal layer includes PNLC or PDLC.

Optionally, the first liquid crystal layer includes a reverse type PNLC.

Optionally, a functional light-adjusting structure is on a layer of the second substrate distal to the liquid crystal layer; wherein the functional light-adjusting structure includes a third substrate, a fourth substrate and a second liquid crystal layer, wherein the third substrate and the fourth substrate are opposite to each other, and the second liquid crystal layer is between the third substrate and the fourth substrate; the second liquid crystal layer includes color dye liquid crystals and is configured to rotate under an electric field between the third substrate and the fourth substrate so as to control transmittance of light with the same color as the color dye liquid crystals in rays incident on the functional light-adjusting structure.

Optionally, a functional light-adjusting structure is on a layer of the second substrate distal to the liquid crystal layer; wherein the functional light-adjusting structure includes a third substrate, a fourth substrate and a second liquid crystal layer, wherein the third substrate and the fourth substrate are opposite to each other, and the second liquid crystal layer is between the third substrate and the fourth substrate; the third substrate includes a third base and a third electrode on a side of the third base proximal to the second liquid crystal layer; the fourth substrate includes a fourth base and a fourth electrode on a side of the fourth base proximal to the second liquid crystal layer; and after a voltage is applied to the third electrode and the fourth electrode, an electric field between the third electrode and the fourth electrode is generated, which controls the second liquid crystal layer to rotate, so that the functional light-adjusting structure displays pictures.

Optionally, a functional light-adjusting structure is on a layer of the second substrate distal to the liquid crystal layer; wherein the functional light-adjusting structure includes a third substrate, a fourth substrate and a second liquid crystal layer, wherein the third substrate and the fourth substrate are opposite to each other, and the second liquid crystal layer is between the third substrate and the fourth substrate; and is configured to rotate under an electric field between the third substrate and the fourth substrate to reflect light with specific wave bands.

Optionally, the second liquid crystal layer includes bistable liquid crystal molecules.

Optionally, the second substrate includes a second base and a second electrode on a side of the second base proximal to the first liquid crystal layer; the second base is adhered to the third base through an inter-substrate adhesive layer.

Optionally, the second substrate includes a second base and a second electrode on a side of the second base proximal to the first liquid crystal layer; the second base and the third base are shared.

In a second aspect, an embodiment of the present disclosure provides a glass module including the above light-adjusting glass.

### BRIEF DESCRIPTION OF DRAWINGS

FIG. 1 is a schematic diagram of a bright state of an exemplary light-adjusting glass;
FIG. 2 is a schematic diagram of a dark state of an exemplary light-adjusting glass;
FIG. 3 is a schematic diagram of a bright state of an exemplary light-adjusting glass;
FIG. 4 is a schematic diagram of a dark state of an exemplary light-adjusting glass;
FIG. 5 is a schematic diagram of a bright state of a light-adjusting glass according to an embodiment of the present disclosure;
FIG. 6 is a schematic diagram of a dark state of a light-adjusting glass according to an embodiment of the present disclosure;
FIG. 7 is a graph showing the contrast of the transmittance in the bright and dark states for a light-adjusting glass including two dye liquid crystal cells and a light-adjusting glass of a single dye liquid crystal cell in cooperation with a reflective polarizer;
FIG. 8 shows an exemplary light-adjusting glass in an embodiment of the present disclosure;
FIG. 9 shows an exemplary light-adjusting glass in an embodiment of the present disclosure;
FIG. 10 shows an exemplary light-adjusting glass in an embodiment of the present disclosure;
FIG. 11 is a top view of FIG. 10;
FIG. 12 shows an exemplary light-adjusting glass having a louver structure according to an embodiment of the present disclosure;
FIG. 13 shows an exemplary light-adjusting glass having a privacy function according to an embodiment of the present disclosure;
FIG. 14 shows an exemplary light-adjusting glass having a colorization function according to an embodiment of the present disclosure;
FIG. 15 shows an exemplary light-adjusting glass having a display function according to an embodiment of the present disclosure; and
FIG. 16 shows an exemplary light-adjusting glass having an infrared light shielding function according to an embodiment of the present disclosure.

### DETAIL DESCRIPTION OF EMBODIMENTS

In order to make a person skilled in the art understand the technical solutions of the present disclosure better, the present disclosure is described below in detail with reference to the accompanying drawings and the specific embodiments.

Unless defined otherwise, technical or scientific terms used herein shall have ordinary meanings as understood by a person skilled in the art to which the present disclosure belongs. The use of "first," "second," and the like in the present disclosure is not intended to indicate any order, quantity, or importance, but rather is used to distinguish one element from another. Also, the use of the words "a," "an," or "the" and the like do not indicate a limitation for the number of items, but rather indicate the presence of at least one item. The word "comprising", "comprises", "including" or "includes" and the like means that an element or item preceding the word includes an element or item listed after the word and its equivalent, but does not exclude other elements or items. The word "connected" or "coupled" and the like is not limited to physical or mechanical connections, but may include electrical connections, regardless of direct or indirect. The words "upper", "lower", "left", "right" and the like are used only to indicate relative positional relationships among objects, and when an absolute position of a described object is changed, the relative positional relationships may be changed accordingly.

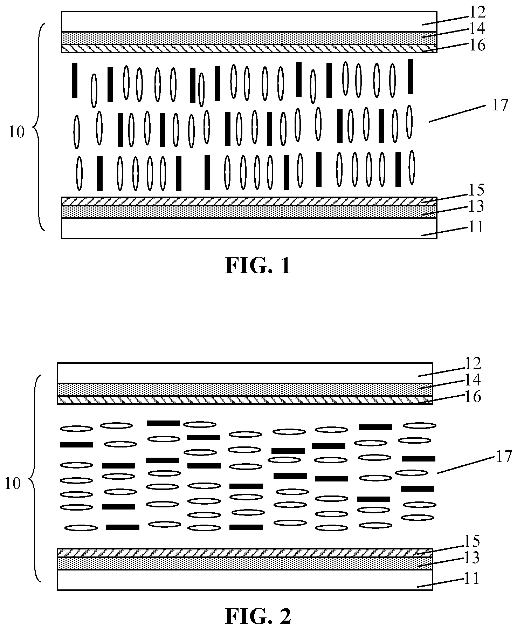

As shown in FIGS.1 and 2, an exemplary light-adjusting glass is provided, which includes a basic light-adjusting structure 10 without a chiral reagent, wherein the basic light-adjusting structure 10 is a dye liquid crystal cell. Specifically, the dye liquid crystal cell includes a first substrate, a second substrate and a dye liquid crystal layer, wherein the first substrate and the second substrate are oppositely arranged, and the dye liquid crystal layer is arranged between the first substrate and the second substrate; the first substrate includes a first base 11, and a first electrode 13 and a first alignment layer 15 which are sequentially arranged on a side of the first base 11 proximal to the liquid crystal layer; the second substrate includes: a second base 12, and a second electrode 14 and a second alignment layer 16 which are sequentially arranged on a side of the second base 12 proximal to the liquid crystal layer; a material of the liquid crystal layer includes liquid crystal molecules and dichroic dye molecules. Depending on dichroic properties of the dichroic dye molecules, only light in an incident light that is parallel to a long axis of the dye molecules would be absorbed.

Specifically, in the embodiment of the present disclosure, a case will be described as an example where the first electrode 13 and the second electrode 14 are both plate-shaped electrodes. The dye liquid crystal cell is a VA-type liquid crystal cell, that is, a display mode thereof is a normally white mode. When no voltage is applied to the first electrode 13 and the second electrode 14, the dye liquid crystal cell is in a bright state, as shown in FIG. 1; when a voltage is applied to the first electrode 13 and the second electrode 14, the dye liquid crystal cell is in a dark state, as shown in FIG. 2. Long axis directions of the dye molecules in the liquid crystal layer are only one direction and are parallel to an alignment direction of the liquid crystals, so that 50% of incident light is absorbed at most, that is, a transmittance in the dark state is more than or equal to 50%. In practice, the long axis of the dye molecules are not completely parallel to each other, a light absorption amount is increased, and, the transmittance is reduced under an influence of a medium, but a transmittance in the dark state is generally more than or equal to 30%. Because the transmittance in the dark state is higher, CR of the light-adjusting glass in the mode is lower (generally about 2); wherein the CR represents a ratio of transmittance in the bright state to transmittance in the dark state.

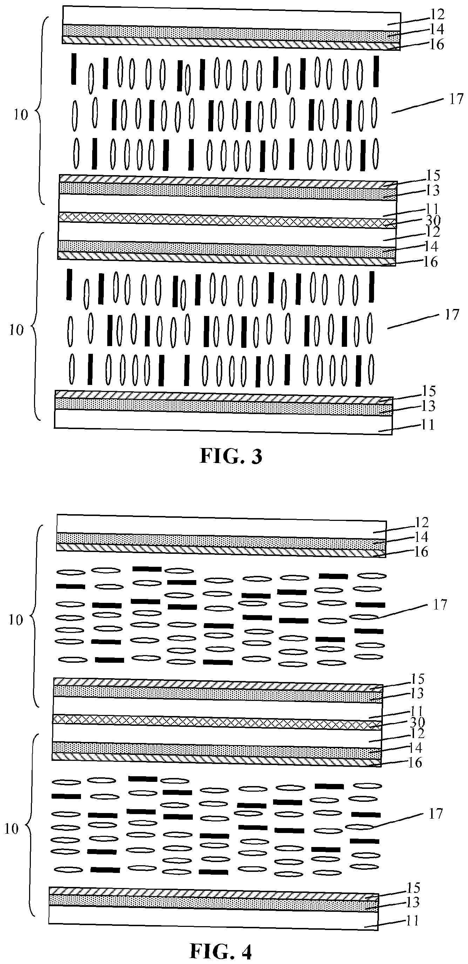

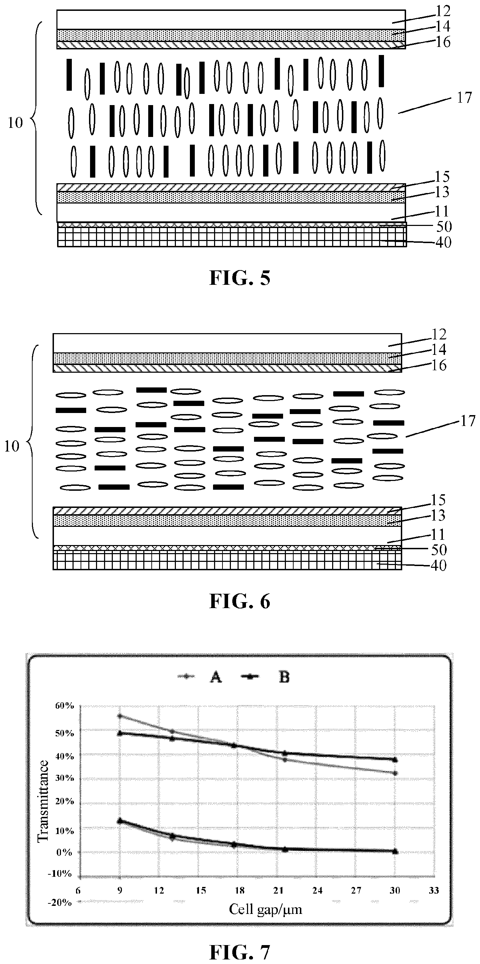

As shown in FIGS. 3 and 4, an exemplary light-adjusting glass is provided, which is composed of two basic light-adjusting structures 10 without a chiral reagent; wherein, FIG. 3 is a schematic diagram of the light-adjusting glass in a bright state; FIG. 4 is a schematic diagram of the light-adjusting glass in a dark state. The structure of each dye liquid crystal cell may be the same as the above structure, particularly, the alignment directions of the two liquid crystal cells in the light-adjusting glass are perpendicular to each other. In the dark state, the long axis direction of dye molecules in one of the two dye liquid crystal cells is perpendicular to that of dye molecules in the other, and a light absorption direction of dye molecules in the one of the two dye liquid crystal cells is perpendicular to that of dye molecules in the other, such that the two dye liquid crystal cells are equivalent to orthogonally placed polarizers, so that the transmittance in the dark state is very low, and the corresponding CR is higher. However, the light-adjusting glass of this mode is composed of two dye liquid crystal cells and an adhesive layer 30 for adhering the two dye liquid crystal cells, and thus, has a relatively large thickness, so that it is difficult to satisfy a demand for thinning of the functional layers in a passenger car, a building, or the like. Therefore, the following light-adjusting glass is provided in the embodiment of the present disclosure. In a first aspect, as shown in FIGS. 5 and 6, the embodiment of the present disclosure provides a light-adjusting glass, which includes a basic light-adjusting glass and a reflective polarizer 40 stacked together; wherein the basic light-adjusting structure 10 and the reflective polarizer 40 are used in cooperation to control the light transmittance of the light-adjusting glass.

It should be noted that the basic light-adjusting structure 10 in the embodiment of the present disclosure refers to a glass structure capable of adjusting the light transmittance, such as dye liquid crystal cells, PDLC smart glass and electrochromic smart glass. In order to make the structure of the light-adjusting glass in the embodiment of the present disclosure more clearly, in the embodiment of the present disclosure, a case will be described as an example where the basic light-adjusting structure 10 is used as a dye liquid crystal cell.

In a first aspect, as shown in FIGS. 5 and 6, the embodiment of the present disclosure provides a light-adjusting glass that includes a dye liquid crystal cell and a reflective polarizer 40; wherein, the dye liquid crystal cell includes: a first substrate and a second substrate disposed oppositely to each other, and a first liquid crystal layer 17 disposed between the first substrate and the second substrate; the first substrate includes: a first base 11, a first electrode 13 and a first alignment layer 15 sequentially disposed on a side of the first base 11 proximal to the first liquid crystal layer 17; the second substrate includes: a second base 12, a second electrode 14 and a second alignment layer 16 sequentially disposed on a side of the second base 12 proximal to the first liquid crystal layer 17; the reflective polarizer 40 is disposed on a side of the first substrate distal to the first liquid crystal layer 17. Both the first electrode 13 and the second electrode 14 may be plate-shaped electrodes, and at this time, the formed dye liquid crystal cell is a liquid crystal cell of a VA mode; when no voltage is applied to the first electrode 13 and the second electrode 14, the dye liquid crystal cell is in the bright state, as shown in FIG. 5; when a voltage is applied to the first electrode 13 and the second electrode 14, the dye liquid crystal cell 1 is in the dark state, as shown in FIG. 6. That is, the dye liquid crystal cell is normally white mode. The alignment directions of both the first alignment layer 15 and the second alignment layer 16 are parallel to each other, that is, a direction of rubbing alignment when the first alignment layer 15 is formed is parallel to a direction of rubbing alignment when the second alignment layer 16 is formed, but the directions of rubbing are opposite to each other. The transmission axis direction of the reflective polarizer 40 is parallel to the alignment of the first alignment layer 15.

For the light-adjusting glass according to the embodiment of the present disclosure, in the dark state, only the polarized light with the same polarization direction as the transmission axis direction of the reflective polarizer 40 is transmitted into the dye liquid crystal cell. Since a direction of rotation of the first liquid crystal layer 17 in the dark state depends on the first alignment layer 15 and the second alignment layer 16, in this way, the long axis direction of the dye molecules in the first liquid crystal layer 17 is the same as the transmission axis direction of the reflective polarizer 40. Therefore, the light incident to the dye liquid crystal cell via the reflective polarizer 40 is only polarized light parallel to the long axis direction of the dye molecules, the positive dye molecules absorb polarized light with a polarization direction parallel to the long axis direction of the dye molecules, so that the polarized light incident to the dye liquid crystal cell via the reflective polarizer 40 is absorbed by the dye molecules. Therefore, the light exiting the light-adjusting glass is little, so that the transmittance of the light-adjusting glass in the dark state is extremely low, and the CR is higher. Moreover, the light-adjusting glass with such the structure is light and thin.

It should be noted that, a case will be described as an example where the dye liquid crystal cell is in normally white mode. Of course, the dye liquid crystal cell may also be in a normally black mode. That is, when a voltage is applied to the first electrode 13 and the second electrode 14, the dye liquid crystal cell is in the dark state; when no voltage is applied to the first electrode 13 and the second electrode 14, the dye liquid crystal cell is in the bright state.

In some embodiments, the dye molecules in the first liquid crystal layer 17 include base liquid crystal molecules and dichroic dye molecules, i.e., dichroic dye molecules are doped in the liquid crystal molecules. The doped dichroic dye molecules may be black dye molecules or color dye molecules, such as, red, orange, etc. Specifically, the dye liquid crystals used in the embodiments of the present disclosure do not contain the chiral reagent, and the dye liquid crystals are positive dye liquid crystals.

In some embodiments, the reflective polarizer 40 includes, but is not limited to, APF (Advanced Polarizer Film; multilayer film reflective polarizer 40), DBEF (Dual Brightness Enhancement Film; multilayer optical film), DLRP (directly-pasted high efficiency reflective polarizer).

The reflective polarizer 40 is typically adhered to the first base 11 by an adhesive layer 50 (which may be referred to as a reflective adhesive layer). In some embodiments, a thickness of the reflective polarizer 40 is, but is not limited to, 150 µm or less. Further, the thickness of the reflective polarizer 40 is less than 50 µm. It may be understood that the smaller the thickness of the reflective polarizer 40 is, the lighter and thinner the whole light-adjusting glass is.

As shown in FIG. 7, a graph of the transmittance in the bright and dark states versus cell gap for the light-adjusting glass of the embodiment of the present disclosure and the light-adjusting glass including two dye liquid crystal cells is shown. The liquid crystal molecules used in the two types of light-adjusting glass are MDA-18-2219, and the reflective polarizer 40 is APF (specifically, the model is 3M V3, with a transmittance of 65%). As may be seen from FIG. 7, the transmittance in the dark state of the light-adjusting glass (curve B) using the reflective polarizer 40 and the dye liquid crystal cell is substantially close to that of the light-adjusting glass (curve A) using two dye liquid crystal cells. When the cell gap is less than 18 µm, the transmittance in the bright state of the light-adjusting glass composed of the reflective polarizer 40 and the dye liquid crystal cell is less than that of the light-adjusting glass including two dye liquid crystal cells. When the cell gap is more than or equal to 18 µm, the transmittance in the bright state of the light-adjusting glass composed of the reflective polarizer 40 and the dye liquid crystal cell is more than that of the light-adjusting glass including two dye liquid crystal cells.

In some embodiments, the first base 11 and the second base 12 may be both glass bases made of hard materials (e.g., quartz), or both flexible bases made of flexible materials (e.g., polyimide PI). Of course, one of the first base 11 and the second base 12 may be the glass base and the other one is the flexible base.

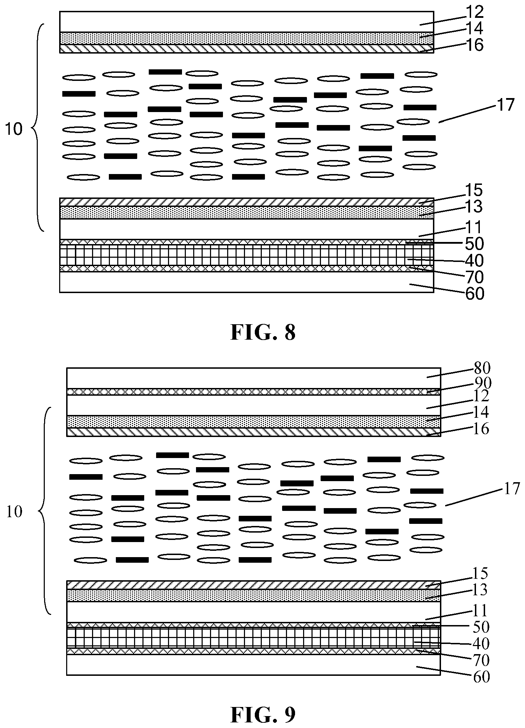

In one example, as shown in FIG. 8, the glass base is used as the first base 11, the flexible base is used as the second base 12. In this case, the reflective polarizer 40 is disposed on the glass base. In order to prevent the reflective polarizer 40 from being scratched, a first protective glass 60 is disposed on a first side of the reflective polarizer 40 distal to the first base 11, and is adhered to the reflective polarizer 40 through a first adhesive layer 70. The first protective glass 60 includes, but is not limited to, tempered glass, and the first adhesive layer 70 includes, but is not limited to, a PVB (Poly Vinyl Butyral Film) adhesive layer. Of course, the second base 12 may be the glass base.

In one example, as shown in FIG. 9, a first protective glass 60 is disposed on a side of the reflective polarizer distal to the first base 11; the first protective glass 60 is adhered to the reflective polarizer 40 through a first adhesive layer 70; a second protective glass 80 is disposed on a first side of the second base 12 distal to the first liquid crystal layer 17; the second cover glass 80 is adhered to the second base by a second adhesive layer 90. The first protective glass 60 and the second protective glass 80 include but are not limited to tempered glass, and the first adhesive layer 70 and the second adhesive layer 90 include but are not limited to PVB (Poly Vinyl Butyral Film) adhesive layer.

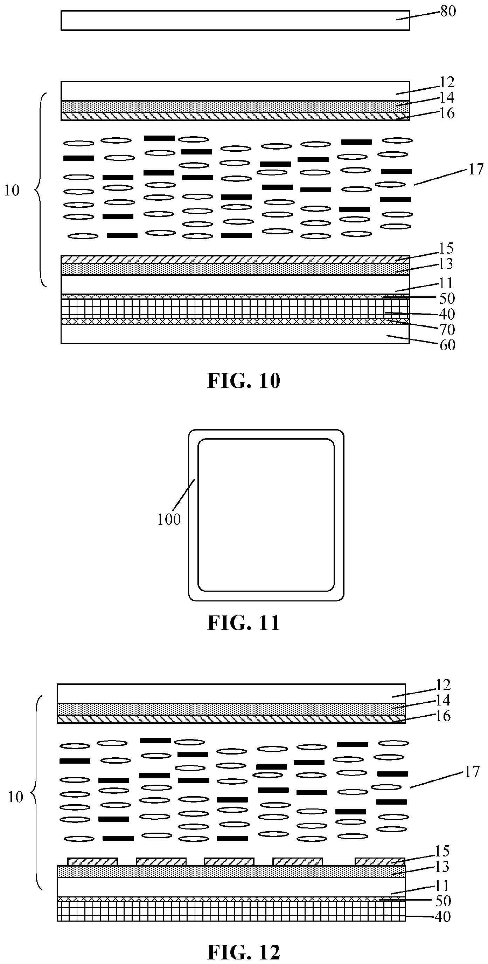

In one example, as shown in FIGS. 10 and 11, a first protective glass 60 is disposed on a side of the reflective polarizer 40 distal to the first substrate; the first protective glass 60 adhered to the reflective polarizer 40 through a first adhesive layer 70; a second protective glass 80 is disposed on a side of the second base 12 distal to the first liquid crystal layer 17, a certain distance exists between the second protective glass 80 and the second base 12, and the second protective glass 80 is sealed with the basic light-adjusting structure 10 through a frame sealant 100. The first protective glass 60 and the second protective glass 80 include but are not limited to tempered glass, and the first adhesive layer 70 include but are not limited to PVB (Poly Vinyl Butyral Film) adhesive layer; the frame sealant 100 includes, but is not limited to, an aluminum frame.

In one example, as shown in FIG. 12, the light-adjusting glass may implement a louver structure. Specifically, one of the first electrode 13 and the second electrode 14 in the dye liquid crystal cell is a strip-shaped electrode, and the other is a plate-shaped electrode. Taking the second electrodes 14 disposed on the second base 12 as the strip-shaped electrodes as an example, each strip-shaped electrode is controlled by a separate driving circuit, so that corresponding voltage signals may be applied to each strip-shaped electrode through each driving circuit corresponding to the strip-shaped electrode, so as to achieve the effect that the transmittances of the light-adjusting glass at positions corresponding to different electrode blocks are different, that is, the transmittances of the light-adjusting glass in respective regions along an arrangement direction of the strip-shaped electrodes (i.e., a direction perpendicular to the extension direction of the strip-shaped electrodes) are different, that is, the effect is similar to a louver. It should be noted that the gray scale of the dye liquid crystal cell of each region corresponding to each strip-shaped electrode may be adjusted, that is, the transmittance may be adjusted.

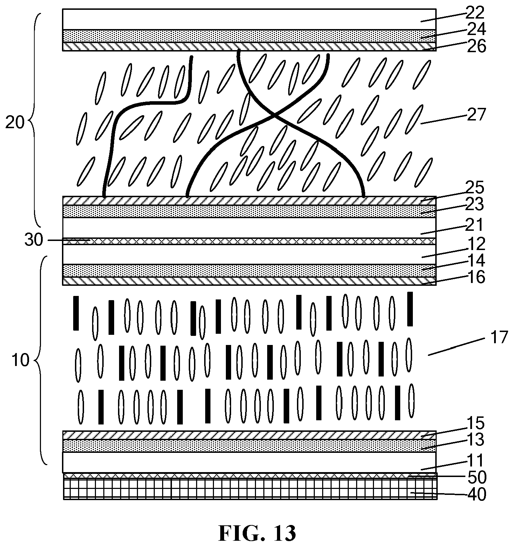

In one example, as shown in FIG. 13, the light-adjusting glass may realize the function of privacy protection, and the light-adjusting glass not only includes the basic light-adjusting structure 10 and the reflective polarizer 40 above, but also includes a functional light-adjusting structure 20, which is fixed to a side of the basic light-adjusting structure 10 distal to the reflective polarizer 40 through an adhesive layer 30 (an inter-substrate adhesive layer); the functional light-adjusting structure 20 includes a third substrate and a fourth substrate disposed opposite to each other, and a second liquid crystal layer 27 disposed between the third substrate and the fourth substrate; wherein the second liquid crystal layer 27 is used for rotating under a control of an electric field between the third substrate and the fourth substrate, so that the functional light-adjusting structure 20 may be in a foggy state, that is, the light-adjusting glass has the privacy protection function.

Specifically, the third substrate of the functional light-adjusting structure 20 includes: a third base 21, a third electrode 23 and a third alignment layer 25 sequentially disposed on the third base 21; the fourth substrate includes: a fourth base 22, a fourth electrode 24 and a fourth alignment layer 26 sequentially disposed on the fourth base 22; a material of the second liquid crystal layer 27 includes, but is not limited to, PNLC (polymer network liquid crystal) or PDLC (polymer dispersed liquid crystal). The third electrode 23 and the fourth electrode 24 may be plate-shaped electrodes, that is, the functional light-adjusting structure 20 is a VA liquid crystal cell structure, and the first liquid crystal layer 17 may be a reverse type (vertical alignment) PNLC.

When the third electrode 23 and the fourth electrode 24 are not energized, there is no electric field between the third electrode 23 and the fourth electrode 24, the refractive index nₚ of the polymer in the reverse type PNLC is equal to the refractive index of a short axis of the liquid crystal molecules (nₚ = nₒ), light may pass through the functional light-adjusting structure 20, and the functional light-adjusting structure 20 is in the bright state. When the third electrode 23 and the fourth electrode 24 are energized, and the applied voltage may generate an electric field between the third electrode 23 and the fourth electrode 24, so that the liquid crystal molecules in the reverse type PNLC are rotated, and when a difference between the refractive index nₚ of the polymer in the reverse type PNLC and the refractive index nₑ of a long axis of the liquid crystal molecules is the largest, the functional light-adjusting structure 20 is in the foggy state; and the voltages applied to the third electrode 23 and the fourth electrode 24 cause the liquid crystal molecules in the reverse type PNLC to rotate, and when there is a difference between the refractive index nₚ of the polymer in the reverse type PNLC and the refractive index nₑ of the long axis of the liquid crystal molecules but the difference is not the maximum, the functional light-adjusting structure 20 is in a gray scale state.

In order to clearly understand the above light-adjusting glass, a case will be described as an example where the first liquid crystal layer 17 includes dye liquid crystals (i.e. dichroic dye molecules are doped in liquid crystal molecules). The first electrode 13 and the second electrode 14 are both plate-shaped electrodes, that is, the basic light-adjusting structure 10 is a VA-type liquid crystal cell. The first alignment layer 15 and the second alignment layer 16 are aligned in parallel. When the first electrode 13 and the second electrode 14 are not energized, the liquid crystal molecules and the dichroic dye molecules in the first liquid crystal layer 17 are aligned perpendicular to the first substrate and the second substrate, so that the incident light may pass through the first liquid crystal layer 17, and the basic light-adjusting structure 10 is in the bright state. When the first electrode 13 and the second electrode 14 are energized and the electric field generated between the first electrode 13 and the second electrode 14 is caused to control the liquid crystal molecules and the dichroic dye molecules to be aligned parallel to the first substrate and the second substrate, the incident light along a long axis of the dichroic dye molecules is absorbed, so that the basic light-adjusting structure 10 is in the dark state. Of course, when the first electrode 13 and the second electrode 14 are energized and the electric field generated between the first electrode 13 and the second electrode 14 is caused to control the liquid crystal molecules and the dichroic dye molecules to be aligned obliquely with respect to the first substrate and the second substrate, a portion of light may pass through the basic light-adjusting structure 10, so that the basic light-adjusting structure 10 is in the gray scale state.

Referring to Table 1, when the functional light-adjusting structure 20 is in the bright state, the gray scale state, and the foggy state, and the basic light-adjusting structure 10 is in the bright state, the dark state, and the gray scale state, the light-adjusting glass is in a corresponding state.

**Table 1**

| Light-adjusting glass | Bright state | Gray scale state | Dark state 1 | Dark state 2 | Privacy protection state |
|---|---|---|---|---|---|
| Basic light-adjusting structure 10 | Bright state | Gray scale state | Dark state | Dark state | Bright state |
| Functional light-adjusting structure 20 | Bright state | Gray scale state | Bright state | Foggy state | Foggy state |

It should be noted that the dark state 1 and the dark state 2 in Table 1 both represent that the light-adjusting glass is in the dark state, and only the reasons why the light-adjusting glass is in the dark state are different. The dark state 1 is that the basic light-adjusting structure 10 is in the dark state, and the functional light-adjusting structure 20 is in the bright state; the dark state 2 is that the basic light-adjusting structure 10 is in the dark state, and the functional light-adjusting structure 20 is in the foggy state.

Therefore, it may be seen that the light-adjusting glass in the embodiment, through the mutual cooperation of the basic light-adjusting structure 10 and the functional light-adjusting structure 20, not only may realize the control of different transmittances of the light-adjusting glass, but also may be in the privacy protection state when the basic light-adjusting structure 10 is in the light state and the functional light-adjusting structure is in the foggy state, so that the privacy protection function may be realized by the structures such as the vehicle window, the glass partition and the building glass using the light-adjusting glass, improving the user experience.

When the basic light-adjusting structure 10 in this embodiment adopts the above liquid crystal cell structure, the cell gap is in a range of 3.5 µm to 30 µm, which may be properly adjusted according to the transmittance of the light-adjusting glass.

When the functional light-adjusting structure 20 in this embodiment adopts the above liquid crystal cell structure, the cell gap is in a range of 5 µm to 15 µm, which may be properly adjusted according to the transmittance of the light-adjusting glass.

The second base 12 of the basic light-adjusting structure 10 and the third base 21 of the functional light-adjusting structure may be shared, and thus the adhesive layer 30 is not necessarily provided, so that the thickness of the light-adjusting glass may be further reduced.

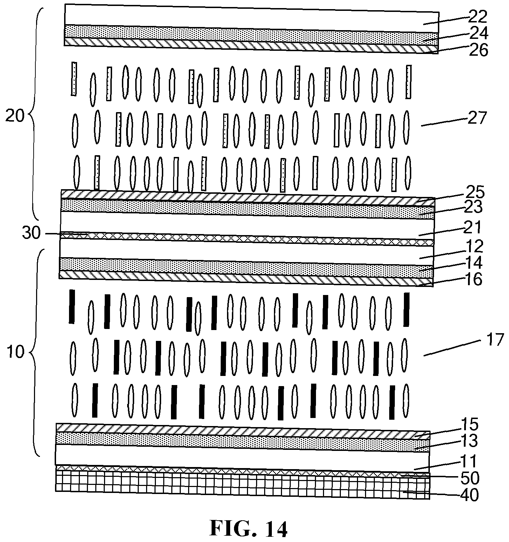

In one example, as shown in FIG. 14, the light-adjusting glass may implement a color light-adjusting function, and the light-adjusting glass not only includes the basic light-adjusting structure 10 and the reflective polarizer 40, but also includes the functional light-adjusting structure 20, and the functional light-adjusting structure 20 is fixed to a side of the basic light-adjusting structure distal to the reflective polarizer 40, through the adhesive layer 30. The functional light-adjusting structure 20 includes a third substrate and a fourth substrate disposed opposite to each other, and a second liquid crystal layer 27 disposed between the third substrate and the fourth substrate; the second liquid crystal layer 27 includes color dye liquid crystals for rotating under the action of an electric field generated between the third substrate and the fourth substrate to enable the functional light-adjusting structure 20 to be in a pure color state. Of course, the functional light-adjusting structure 20 may also be in the bright state, the dark state or the gray scale state under the actions of different electric fields between the third substrate and the fourth substrate.

Specifically, the third substrate of the functional light-adjusting structure 20 includes: a third base 21, a third electrode 23 and a third alignment layer 25 sequentially disposed on the third base 21; the fourth substrate includes: a fourth base 22, a fourth electrode 24 and a fourth alignment layer 26 sequentially disposed on the fourth base 22; the material of the second liquid crystal layer 27 includes, but is not limited to, color dye liquid crystals, i.e., dichroic dye molecules mixed in liquid crystal molecules. The third electrode 23 and the fourth electrode 24 may be both plate-shaped electrodes, that is, the functional light-adjusting structure 20 is a VA-type liquid crystal cell structure.

Specifically, when the third electrode 23 and the fourth electrode 24 are not energized, the liquid crystal molecules and the dichroic dye molecules in the color dye liquid crystals between the third electrode 23 and the fourth electrode 24 are perpendicular to the third base 21 and the fourth base 22, and at this time, light may pass through the functional light-adjusting structure 20, and the functional light-adjusting structure 20 is in the bright state. When the third electrode 23 and the fourth electrode 24 are energized, the applied voltage may generate an electric field between the third electrode 23 and the fourth electrode 24, the liquid crystal molecules and the dichroic dye molecules in the color dye liquid crystals are controlled to be rotated and parallel to the third base 21 and the fourth base 22, so that the functional light-adjusting structure 20 is in the pure color state. When the third electrode 23 and the fourth electrode 24 are energized, the applied voltage may generate an electric field between the third electrode 23 and the fourth electrode 24, the liquid crystal molecules and the dichroic dye molecules in the color dye liquid crystals are controlled to be rotated and not parallel to and not perpendicular to the third base 21 and the fourth base 22, so that the functional light-adjusting structure 20 is in the gray scale state.

The basic light-adjusting structure 10 is the same as that in the above-described embodiment, and thus will not be described here.

Referring to Table 2, when the functional light-adjusting structure 20 is in the bright state, the gray scale state, the dark state, and the pure color state; the basic light-adjusting structure 10 is in the bright state, the dark state, and the gray scale state, the light-adjusting glass is in the corresponding state.

**Table 2**

| Light-adjusting glass | Bright state | Gray scale state | Dark state | Pure color state |
|---|---|---|---|---|
| Basic light-adjusting structure 10 | Bright state | Gray scale state | Dark state | Dark state |
| Functional light-adjusting structure 20 | Bright state | Gray scale state | Dark state | Pure color state |

Therefore, it may be seen that the light-adjusting glass in the embodiment, with the mutual cooperation of the basic light-adjusting structure 10 and the functional light-adjusting structure 20, not only may realize different transmittances of the light-adjusting glass, but also may be colored when the basic light-adjusting structure 10 is in the light state and the functional light-adjusting structure 20 is in the pure color state.

The second base 12 in the basic light-adjusting structure 10 and the third base 21 of the functional light-adjusting structure may be shared, so that the adhesive layer 30 may be omitted, and thus the thickness of the light-adjusting glass may be further reduced.

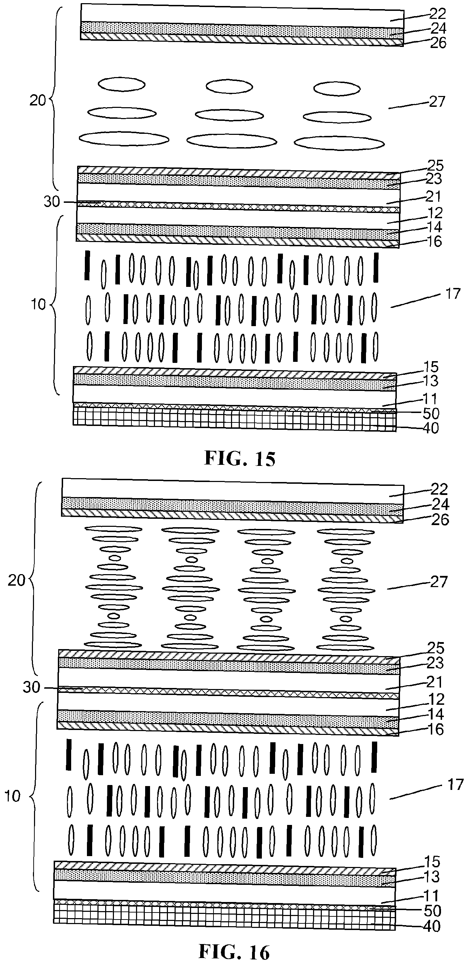

In one example, as shown in FIG. 15, similar to the above example, the light-adjusting glass has a display function, and the light-adjusting glass not only includes the above basic light-adjusting structure 10 and the reflective polarizer 40, but also includes the functional light-adjusting structure 20, and the functional light-adjusting structure 20 is fixed to a side of the basic light-adjusting structure 10 distal to the reflective polarizer 40 through the adhesive layer 30. The functional light-adjusting structure 20 includes a third substrate and a fourth substrate disposed opposite to each other, and a second liquid crystal layer 27 disposed between the third substrate and the fourth substrate; the second liquid crystal layer 27 includes color dye liquid crystals or base liquid crystals, and is used for rotating under the action of an electric field generated between the third substrate and the fourth substrate to enable the functional light-adjusting structure 20 to display.

Specifically, the third substrate of the functional light-adjusting structure 20 includes: a third base 21, a third electrode 23 and a third alignment layer 25 sequentially disposed on the third base 21; the fourth substrate includes: a fourth base 22, a fourth electrode 24 and a fourth alignment layer 26 sequentially disposed on the fourth base 22; specifically, one of the third electrode 23 and the fourth electrode 24 is a pixel electrode, the other is a common electrode, and the pixel electrode is disposed corresponding to a pixel unit, so that the liquid crystals in the second liquid crystal layer 27 are driven to rotate by applying a voltage to the pixel electrode and the common electrode, thereby realizing the display function.

The second base 12 in the basic light-adjusting structure 10 and the third base 21 of the functional light-adjusting structure may be shared, so that the adhesive layer 30 may be omitted, and thus the thickness of the light-adjusting glass may be further reduced.

In one example, as shown in FIG. 16, the light-adjusting glass may realize an infrared light shielding function, and the light-adjusting glass not only includes the basic light-adjusting structure 10 and the reflective polarizer 40, but also includes the functional light-adjusting structure 20, and the functional light-adjusting structure 20 is fixed to a side of the basic light-adjusting structure 10 distal to the reflective polarizer 40 through the adhesive layer 30. The functional light-adjusting structure 20 includes a third substrate and a fourth substrate disposed opposite to each other, and a second liquid crystal layer 27 disposed between the third substrate and the fourth substrate, for rotating under an electric field generated between the third substrate and the fourth substrate, so that the functional light-adjusting structure 20 may reflect infrared light.

The second liquid crystal layer 27 may employ bistable liquid crystals that reflect infrared light. Under the action of an electric field between the third substrate and the fourth substrate, the bistable liquid crystals may be in a P state, an H state and an FC state.

Specifically, the third substrate of the functional light-adjusting structure 20 includes: a third base 21, a third electrode 23 and a third alignment layer 25 sequentially disposed on the third base 21; the fourth substrate includes: a fourth base 22, a fourth electrode 24 and a fourth alignment layer 26 sequentially disposed on the fourth base 22; the second liquid crystal layer 27 may specifically include bistable liquid crystals that reflect infrared light.

When the bistable liquid crystals are in the P state, visible light may normally pass through the functional light-adjusting structure 20, and infrared light is reflected by the bistable liquid crystals. When the bistable liquid crystals are in the H state, the visible light and the infrared light may pass through the functional light-adjusting structure 20. When the bistable liquid crystals are in the FC state, the visible light and the infrared light are scattered.

The basic light-adjusting structure 10 is the same as the above embodiments, and is not described herein again.

In a first situation, when the basic light-adjusting structure 10 is in the bright state and the bistable liquid crystals in the functional light-adjusting structure 20 are in the P state, the visible light may normally pass through the light-adjusting glass, and the infrared light is reflected by the bistable liquid crystals, the smart light-adjusting glass for preventing infrared light is in an infrared light shielding mode, so as to achieve an infrared light shielding effect. The light-adjusting glass may be applied to the fields of buildings, vehicle windows and the like. When the temperature is higher in summer, the infrared light shielding mode may be started while the light-adjusting glass is in light-transmitting mode, such that the infrared light is prevented from entering indoors or in the vehicle windows, the indoor temperature is reduced, the energy consumption of an indoor or in-vehicle air conditioner is reduced, and the energy-saving effect is achieved.

In a second situation, when the basic light-adjusting structure 10 is in the bright state and the bistable liquid crystals in the functional light-adjusting structure 20 are in the H state, both the visible light and the infrared light may pass through the light-adjusting glass. When the temperature is lower in winter, the light-adjusting glass is in such a state, and the infrared rays irradiate indoors or in a vehicle, so that the indoor or in-vehicle temperature is improved, the energy consumption of an indoor or in-vehicle air conditioner may be reduced, and the energy-saving effect is achieved.

In a third situation, when the basic light-adjusting structure 10 is in the dark state and the bistable liquid crystals in the functional light-adjusting structure 20 are in the H state, only infrared light may pass through the light-adjusting glass.

In a fourth situation, when the basic light-adjusting structure 10 is in the dark state and the bistable liquid crystals in the functional light-adjusting structure 20 are in the FC state, the light-adjusting glass is in a scattering dark state, and actually is also in the dark state.

In a fifth situation, similar to the first situation, when the basic light-adjusting structure 10 is in the dark state and the bistable liquid crystals in the functional light-adjusting structure 20 are in the P state, the light-adjusting glass is in the dark state at this time, and may also prevent the infrared light.

In a sixth situation, when the basic light-adjusting structure 10 is in the gray scale state and the bistable liquid crystals in the functional light-adjusting structure 20 are in the H state or the FC state, the light-adjusting glass is in the gray scale state.

In a second aspect, an embodiment of the present disclosure further provides a glass module, which includes the above light-adjusting glass.

The glass module may be applied to traffic facilities such as automobiles, trains, airplanes and the like, and may also be applied to intelligent windows in buildings. Because the glass module in the embodiment of the present disclosure includes the above light-adjusting glass, the transmittance in the dark state is low, the CR is high, and the glass module is light and thin.

It should be understood that the above embodiments are merely exemplary embodiments employed to illustrate the principles of the present disclosure, but the present disclosure is not limited thereto. It will be apparent to a person skilled in the art that various changes and modifications may be made therein without departing from the spirit and scope of the present disclosure, and these changes and modifications are to be considered within the scope of the present disclosure.

## Claims

1. A light-adjusting glass, comprising a basic light-adjusting structure and a reflective polarizer;
wherein the basic light-adjusting structure comprises a first substrate, a second substrate and a first liquid crystal layer, wherein the first substrate and the second substrate are opposite to each other, and the first liquid crystal layer is between the first substrate and the second substrate; the first liquid crystal layer is configured to rotate under an electric field between the first substrate and the second substrate so as to control transmittance of light; and
the reflective polarizer is on a side of the first substrate distal to the first liquid crystal layer.

2. The light-adjusting glass of claim 1, wherein the first liquid crystal layer comprises: base liquid crystal molecules and dichroic dye molecules.

3. The light-adjusting glass of claim 1, wherein the first substrate comprises a first base, a first electrode on a side of the first base proximal to the first liquid crystal layer; the second substrate comprises a second base and a second electrode on a side of the second base proximal to the first liquid crystal layer; wherein
the first electrode and the second electrode are both plate-shaped electrodes.

4. The light-adjusting glass of claim 1, wherein the first substrate comprises a first base, a first electrode on a side of the first base proximal to the first liquid crystal layer; the second substrate comprises a second base and a second electrode on a side of the second base proximal to the first liquid crystal layer; wherein
one of the first electrode and the second electrode is a plate-shaped electrode, and the other is a strip-shaped electrode.

5. The light-adjusting glass of claim 3 or 4, wherein the first base is adhered to the reflective polarizer by a reflective adhesive layer.

6. The light-adjusting glass of claim 1, wherein the reflective polarizer comprises any one of APF, DBEF, DLRP.

7. The light-adjusting glass of claim 1, wherein the reflective polarizer has a thickness of 150 µm or less.

8. The light-adjusting glass of any one of claims 1 to 7, further comprising a first protective glass which is on a side of the reflective polarizer distal to the first substrate and is adhered to the reflective polarizer by a first adhesive layer.

9. The light-adjusting glass of any one of claims 1 to 7, further comprising a first protective glass which is on a side of the reflective polarizer distal to the first substrate and is adhered to the reflective polarizer by a first adhesive layer; and
a second protective glass which is on a first side of the second substrate distal to the first liquid crystal layer and is adhered to the reflective polarizer by a second adhesive layer.

10. The light-adjusting glass of claim 1, further comprising a first protective glass which is on a side of the reflective polarizer distal to the first substrate and is adhered to the reflective polarizer by a first adhesive layer; and
a second protective glass which is on a first side of the second substrate distal to the first liquid crystal layer; wherein a spacing exists between the second substrate and the second protective glass, and the second protective glass is sealed with the basic light-adjusting structure by a frame sealant.

11. The light-adjusting glass of claim 1, further comprising a functional light-adjusting structure which is on a layer of the second substrate distal to the liquid crystal layer; wherein the functional light-adjusting structure comprises a third substrate, a fourth substrate and a second liquid crystal layer, wherein the third substrate and the fourth substrate are opposite to each other, and the second liquid crystal layer is between the third substrate and the fourth substrate; the second liquid crystal layer is configured to rotate under an electric field between the third substrate and the fourth substrate, so that the functional light-adjusting structure is in a foggy state.

12. The light-adjusting glass of claim 10, wherein the second liquid crystal layer comprises PNLC or PDLC.

13. The light-adjusting glass of claim 12, wherein the first liquid crystal layer comprises a reverse type PNLC.

14. The light-adjusting glass of claim 1, further comprising a functional light-adjusting structure which is on a layer of the second substrate distal to the liquid crystal layer; wherein the functional light-adjusting structure comprises a third substrate, a fourth substrate and a second liquid crystal layer, wherein the third substrate and the fourth substrate are opposite to each other, and the second liquid crystal layer is between the third substrate and the fourth substrate; the second liquid crystal layer comprises color dye liquid crystals and is configured to rotate under an electric field between the third substrate and the fourth substrate so as to control a transmittance of light with the same color as the color dye liquid crystals in rays incident on the functional light-adjusting structure.

15. The light-adjusting glass of claim 1, further comprising a functional light-adjusting structure which is on a layer of the second substrate distal to the liquid crystal layer; wherein the functional light-adjusting structure comprises a third substrate, a fourth substrate and a second liquid crystal layer, wherein the third substrate and the fourth substrate are opposite to each other, and the second liquid crystal layer is between the third substrate and the fourth substrate; the third substrate comprises a third base and a third electrode on a side of the third base proximal to the second liquid crystal layer; the fourth substrate comprises a fourth base and a fourth electrode on a side of the fourth base proximal to the second liquid crystal layer; and after a voltage is applied to the third electrode and the fourth electrode, an electric field between the third electrode and the fourth electrode is generated, which controls the second liquid crystal layer to rotate, so that the functional light-adjusting structure displays pictures.

16. The light-adjusting glass of claim 1, further comprising a functional light-adjusting structure which is on a layer of the second substrate distal to the liquid crystal layer; wherein the functional light-adjusting structure comprises a third substrate, a fourth substrate and a second liquid crystal layer, wherein the third substrate and the fourth substrate are opposite to each other, and the second liquid crystal layer is between the third substrate and the fourth substrate; and is configured to rotate under an electric field between the third substrate and the fourth substrate to reflect light in a predetermined waveband.

17. The light-adjusting glass of claim 16, wherein the second liquid crystal layer comprises bistable liquid crystal molecules.

18. The light-adjusting glass of any one of claims 11 to 17, wherein the second substrate comprises a second base and a second electrode on a side of the second base proximal to the first liquid crystal layer; and the second base is adhered to the third base by an inter-substrate adhesive layer.

19. The light-adjusting glass of any one of claims 11 to 17, wherein the second substrate comprises a second base and a second electrode on a side of the second base proximal to the first liquid crystal layer; and the second base and the third base are shared as a single piece.

20. A glass module, comprising the light-adjusting glass of any one of claims 1 to 19.
